# EUROPEAN PATENT SPECIFICATION

(11) **EP 0 751 098 B1**
(45) Date of publication and mention of the grant of the patent: **08.12.1999**
(21) Application number: 96201599.6
(22) Date of filing: 07.06.1996
(51) Int. Cl.: C02F 3/30, C02F 3/00

(54) **Method for purifying nitrogen-containing waste water streams**
Reinigungsverfahren für stickstoffhaltige Abwässer
Procédé de traitement d'eaux résiduaires azotées

(30) Priority: 30.06.1995 NL 1000710
(43) Date of publication of application: 02.01.1997
(73) Proprietor: CSM Suiker B.V., 9745 AG Groningen (NL)
(72) Inventor: Baar, Jan, 9801 LB Zuidhoorn (NL); De Schutter, Michel Adrianus Maria Theresia, 9766 TS Eelderwolde (NL)
(74) Representative: de Bruijn, Leendert C.

(56) References cited:
- EP-A- 0 070 592

## Description

The invention relates to a method for purifiying nitrogen-containing waste water streams.

Both domestic and industrial waste water contain (Kjeldahl) nitrogen compounds (Nₖⱼ-N). In untreated waste water, these nitrogen compounds are present particularly in the form of ammonium (NH₄-N) and/or organically bound nitrogen. By means of biological processes, these nitrogen compounds can be converted in to nitrogen gas and as such be eliminated from the waste water. In so doing, organically bound nitrogen is first of all converted into ammonium (ammonification). This process proceeds rapidly and rarely is a limiting factor for total nitrogen elimination. Then the ammonium is converted in to nitrate (NO₃-N) under aerobic conditions by means of oxidation. This process is called nitrification. The nitrification takes place with the aid of bacteria which use ammonium and carbon dioxide as substrates. The presence of a sufficient amount of oxygen and a relatively low COD concentration (COD) = Chemical Oxygen Demand) are essential for this nitrification process to proceed smoothly. The last step in the nitrogen elimination is the denitrification. In this last process, nitrate is converted into nitrogen gas. In contrast to the nitrification process, this denitrification process requires a relatively high COD, and the oxygen concentration should be very low.

The bacteria which are involved in nitrification and denitrification are known as nitrifiers and denitrifiers and are generally known. The nitrifiers function under aerobic conditions, whereas the denitrifiers are active under anoxic conditions, i.e. in the absence of oxygen and the presence of nitrate.

For instance, a process for the biological purification of waste water is disclosed in EP-A-0 070 591. According to said EP-A organic and nitrogen compounds dissolved in the waste water are at least partly removed by passing the waste water through an aerobic nitrification phase and an anaerobic denitrification phase. In the aerobic phase the molecular oxygen concentration is at least in part controlled by means of the NOₓ-N-concentration. As indicated on page 2, lines 18-36 of said EP-A the ratio between the chemical oxygen demand (COD) and the nitrogen compounds in the waste water is preferably higher than 5. This is normally true for domestic and industrial waste water streams. However, in the case that the waste water does not contain enough organic matter as pollutants, it is considered advantageous to add an organic waste stream, for instance a solution of carboxylic acids, to the waste water in order to ensure that enough oxygen acceptor is present to reduce the NOₓ to molecular nitrogen.

As a result of the increasing demands made by the authorities with regard to the effluent discharges of water treatment plants into surface water, many treatment plants need to be adapted or modernized. One of the more stringent demands in terms of effluent discharges relates to the maximum permitted amount of nitrogen in the effluent. Given these more stringent requirement, a number of techniques have been developed over the last few years for adapting existing treatment plants to optimum nitrogen elimination. One of the plants used is a Sequenced Batch Reactor (SBR) which contains an activated sludge system, by means of which the waste water is purified batchwise. Some of the advantages of these SBR systems, compared with the likewise generally known continuous treatment plants, are that all processes take place in a single tank, process control and monitoring can be implemented simply, and that, owing to the process being run in a batchwise manner, any flushing out of activated sludge is virtually prevented. These SBR treatment plants have therefore, over time, been adapted in order to obtain optimum conditions for nitrogen elimination.

More in particular, the SBR treatment system roughly comprises five steps: 1) charging. 2) carrying out the purification process (i.e. aeration), 3) sedimentation, 4) siphoning off the effluent, 5) discharging surplus sludge. The duration of the cycle (steps 1-5) depends on a number of factors such as:
- composition of waste water: COD and BOD load (readily or not readily degradable), nitrogen compounds and phosphate compounds.
- amount of waste water: the amount per cycle is determining the dilution factor and the amount per day for the pollution load.
- pollution load: is determined by the COD load or BOD load and the Nₖⱼ-N level and the amount of waste water, expressed in kg of COD/day or kg of BOD/day and kg of Nₖⱼ-N/day.
- dilution factor: this is the ratio of the total volume of the tank and the amount of fresh waste water per cycle.
- sludge content: amount of sludge in the reactor expressed in g of DS/l; DS = Dry Substance.
- sludge load: expressed in kg of COD/kg of DS.day) or kg of BOD/kg of DS.day), and
- temperature: determines the reaction times of the biological processes.

For a successful elimination, in the known manner, of nitrogen in SBR systems, the tank should first, after the effluent has been drained, be refilled with influent. During this filling operation, only stirring is carried out, without aeration; i.e. the so-called denitrification period. During this period, the NO₃-N present is denitrified with the aid of freshly introduced substrate to give as low an NO₃-N concentration as possible. Such a denitrification period lasts for approximately 30-40 minutes. Then aeration of the reactor is started, and the Nₖⱼ-N introduced by means of the influent, and the remainder of the organic carbon compounds is oxidized to NO₃-N and CO₂, respectively. As soon as this reaction is complete, which can be checked by means of an oxygen measurement, stirring and aeration is stopped and sedimentation commences. This sedimentation period lasts for approximately 30-60 minutes. After the sedimentation period is complete, part of the clear upper layer is drained off as effluent down to a previously set level. When this level has been reached, the processing cycle recommences.

Given that the aeration phase is the last step in the above-described purification process, a fraction of the NO₃-N formed will always be discharged with the effluent. The NO₃-N concentration in the effluent is determined by the Nₖⱼ-N concentration in the influent and also by the dilution of the influent in the purification stage. The effect of the dilution of the influent on the NO₃-N concentration in the effluent is shown - assuming a volume of the SBR reactor of 100 m³ and an Nₖⱼ influent of 50 mg/l - in the table below.

**TABLE A**

| Influent per batch (m³) | Dilution factor (-) | NO₃-N effluent (mg/l) | Efficiency (%) N elimination |
|---|---|---|---|
| 50 | 2 | 25 | 50 |
| 25 | 4 | 12.5 | 75 |
| 20 | 5 | 10 | 80 |
| 10 | 10 | 5 | 90 |
| 5 | 20 | 2.5 | 95 |

It follows from the above Table A, that in the case of a nitrogen elimination efficiency of 95%, a dilution factor of 20 should be used. In practice, such a dilution factor is infeasible or barely feasible. It would mean, particularly with large waste water streams such as those arising in sugar refining plants, that the volumes of the SBR systems would have to be very large and that much time would be lost owing to a batch treatment (charging, purifying, sedimentation, siphoning off, and discharging surplus sludge) having to be carried out more frequently. Nowadays, a dilution factor of approximately 6 is therefore used in practice. Thus, a total N reduction of approximately 80% of the total N concentration in the influent is achieved.

It follows from the above that, if a known SBR installation and a dilution factor of approximately 6 for the influent are employed, this may result in an inadequate nitrogen elimination efficiency. In addition, doubling the number of cycles per day, for example from 3 to 6, leads to a loss in capacity of the SBR installation of approximately 15%.

It was found that the above-mentioned problem with respect to achieving an optimal nitrogen elimination efficiency with the aid of an SBR reactor can be overcome by carrying out the following charging stage cycle which comprises:
(a) supplying a first waste water influent to an SBR reactor charged with nitrifying or denitrifying bacteria respectively, to a lower level than when the SBR reactor is charged in one single step;
(b) nitrifying by means of aerating the reactor contents;
(c) supplying a second waste water influent to the SBR reactor up to the maximum level of the SBR reactor, so that reactor contents having a COD/NO₃-N ratio ≥ 4 are obtained;
(d) carrying out a denitrification of the reactor contents;
(e) nitrifying once more by means of aerating the reactor contents;
(f) allowing the reactor contents to settle; and
(g) draining part of the reactor contents as effluent.

The method according to the invention involves charging the SBR reactor, after the effluent has been drained, to a lower level than when it is charged in one single step. As soon as the first influent (step a) is introduced, the aeration starts, expediently with stirring (step b), and the nitrogen compounds and Nₖⱼ-N introduced are oxidized. As soon as this reaction is complete, which can be checked by means of an O₂ measurement, aeration is stopped. This aeration step (b) normally lasts for 2-3 hours.

After the aeration step is complete, step (c) involves supplying the second influent, with stirring, up to the maximum level of the SBR reactor. This second influent is advantageously supplied in such a way that the reactor contents reach a COD/NO₃-N ratio of ≥ 5. Because of this high COD/NO₃-N ratio, the COD (being the substrate for the denitrifying bacteria) during the denitrification step, where the O₂ concentration is lower than 0.5 mg/l and the pH is between 6 and 8, preferably between 7 and 7.5, is high. Furthermore, the second influent has a relatively low Nₖⱼ-N level, which is oxidized, in a further stage, to NO₃-N and is (in part) discharged via the effluent.

During the denitrification step, which is carried out advantageously at a temperature in the range from 10 - 40°C and over a time range of 20 - 40 minutes, the NO₃-N formed in the previous step is then reduced to nitrogen gas, which gas then escapes from the SBR reactor. For the sake of completeness, it should be mentioned that theoretically 2.86 g of COD are required for the reduction of 1 g of NO₃-N. In practice, however, a somewhat larger amount is found to be required, and the denitrification is advantageously carried out at a COD/NO₃-N ratio of ≥ 5.

With respect to the first and second influent it should be noted that the dilution factor of the total amount of influent as supplied in steps (a) and (c), in the reactor will usually be 4-8. Furthermore, the volume ratio for the first influent of step (a) to the second influent of step (c) is preferably 1:0.1 - 0.5, partly depending on the Nₖⱼ-N of the first influent and the COD value of the second influent, and on the desired degree of purification of the effluent.

Then, in step (e), the aeration is restarted and the remainder of the carbon compounds introduced with the second influent and the Nₖⱼ-N is oxidized. This aeration step can advantageously be carried out with stirring for 2-4 hours.

As soon as the above-mentioned aeration step is complete, the stirring apparatus is stopped, and the sedimentation period of the activated sludge which is preferably used as the biomass, commences. This sedimentation step (f) normally takes 30-60 minutes.

After the above-mentioned sedimentation step (f) the effluent is drained off down to a previously set minimum level, and the cycle (a) - (g), which can take, in total, 6-10 hours, recommences.

With respect to the method according to the invention, it should be mentioned that only the introduced Nₖⱼ-N of the second influent ends up in the effluent after oxidation to NO₃-N. It is therefore possible, using the method according to the invention, to limit the N load in the effluent to a minimum without, however, any loss in capacity occurring owing to additional sedimentation and draining time.

The method according to the invention is suitable, in particular, for biological purification of the waste water of, inter alia, the food industry, the chemical industry etc., a number of waste water streams being obtained, one of the waste water streams having a high COD load and advantageously also a low Nₖⱼ-N level. The influent for the SBR systems in, for example, a sugar refinery often consists of a mixture of five waste water streams. Table B below shows the characteristics of these separate streams and the total waste water stream.

**TABLE B**

| Type of waste water | Flow rate (m³/day) | COD-tot (mg/l) | N-Kjeldahl (mg/l) |
|---|---|---|---|
| Condensate | 6,800 | 200 | 100-200 |
| Cooling water | 1,000 | 150 | 60 |
| Effluent AP | 600 | 1,000 | 60-130 |
| Sanitary installation/rainwater | 145 | 300 | 30 |
| Floating/washing water | 2,500 | 3,500 | 60-130 |
| TOTAL | 11,045 | 975 | 85-165 |

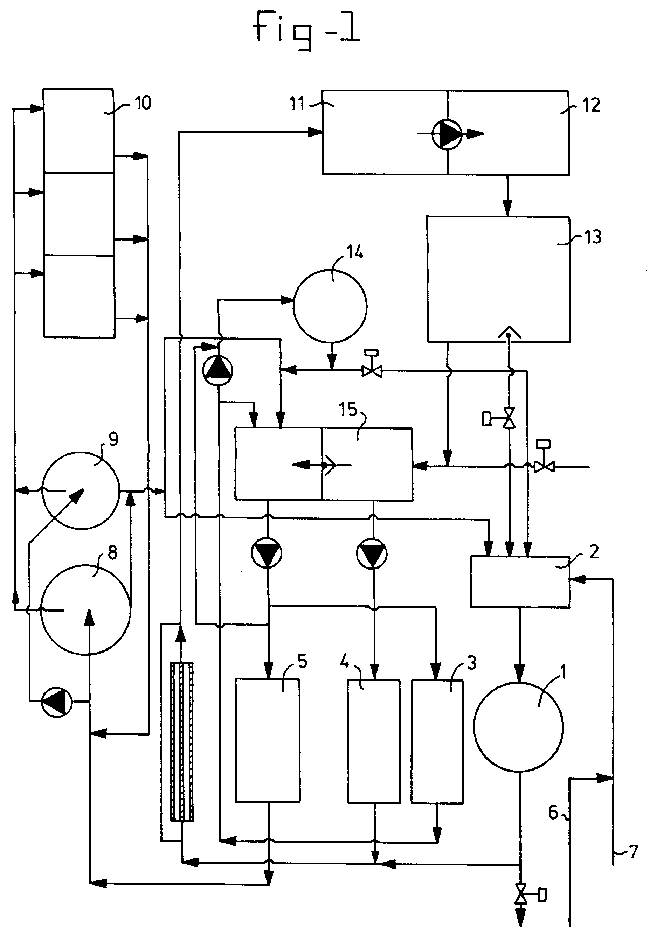

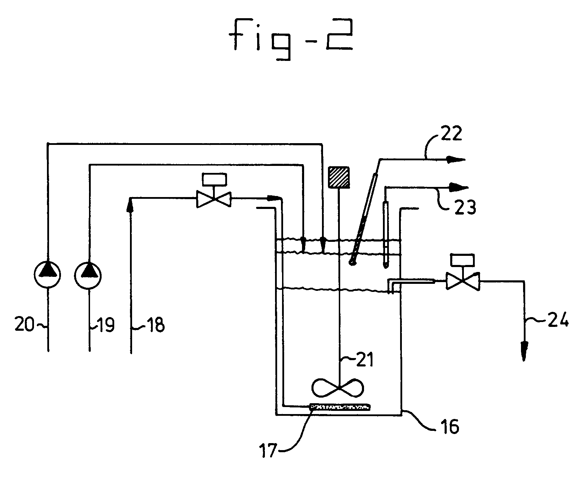

With respect to the above-mentioned influent streams, the following points are raised, for the sake of completeness.
1) The floating and washing water is used for transporting and washing the sugar beet and amounts to approximately 3000-4500 m³/hour. The sugar losses which occur in the course of the transport, discharging and washing the beet, end up in this floating and washing water. The washing and floating water circuit includes an anaerobic purification (AP), which purifies part of the floating and washing water to such an extent that it is again suitable for reuse. The COD breakdown in the AP on average is approximately 23 tonnes/day. The effluent of the AP is returned, for the greater part, to the floating and washing water circuit. Rainfall and rinsing water always produce a surplus of floating and washing water. Passing part of said floating and washing water (approximately 2,500 m³/day) to the SBR makes it possible to control the level of the floating and washing water circuit.
2) The following points are raised with respect to the condensate.
   As is well known, sugar beet consists of approximately 5% of cell material, approximately 16% of sugar, approximately 1% of soluble substances other than sugars and approximately 78% of water. A large proportion of this water is released as condensate during the evaporation process of sugar production.
   Part of this condensate is reused as process water, while the remaining condensate is passed to the influent basin.
   The Nₖⱼ-N level of the condensate depends on the amide content of the sugar beet, which is largely converted, ammonia being split off, in the clarification involved in the sugar production process. In the course of the evaporation process this ammonia then largely ends up in the condensate.
3) The cooling water circuit is an essentially closed circuit. This cooling water is predominantly employed for condensing the vapours from the sugar crystallization process. Condensation of the water vapour produces a surplus of water in this circuit. This surplus is passed to the influent basin. This influent basin and the SBR reactor are depicted in Figure 1, which represents the process water circuit of a sugar refinery. More details of Figure 1 are given in the legend below. The actual method according to the invention is implemented in an SBR reactor as shown in Figure 2. More details are given in the legend.

### LEGEND

In Figure 1, the numbers 1-15 have the following meaning:
- 1.: SBR reactor(s)
- 2.: Influent basin
- 3.: Condenser
- 4.: Condenser
- 5.: Floating and washing water circuit
- 6.: Sanitary installation plus rainwater conduit
- 7.: Condensate line
- 8. and 9.: Thickener 1 and 2
- 10.: Sedimentation areas
- 11. and 12.: Facultative lagoon 1 and 2
- 13.: Aeration lagoon
- 14.: Anaerobic purification reactor
- 15.: Pumping station.

In Figure 2, the numbers 16-24 have the following meaning:
- 16.: Tank
- 17.: Aeration apparatus
- 18.: Air supply line
- 19.: Influent supply line
- 20.: Influent supply line
- 21.: Stirring apparatus
- 22.: O₂ meter
- 23.: pH meter
- 24.: Effluent line.

### EXAMPLES

### Example I

In accordance with this example, the process of charging the SBR reactor with influent was carried out in two steps, the first influent corresponding to the total waste water from the sugar refinery minus the floating and washing water, whereas the second charge was carried out with the floating and washing water. The reactor used was the SBR reactor according to Figure 2. During the start-up period (= adaptation period), the total N load in the effluent of the test purification initially rose to 25.0 mg/l and then dropped to 5.0 mg/l. This means, that the adaptation period took approximately 6 days. The total N reduction during this start-up period was approximately 78%. The results of this adaptation period are given in Table C.

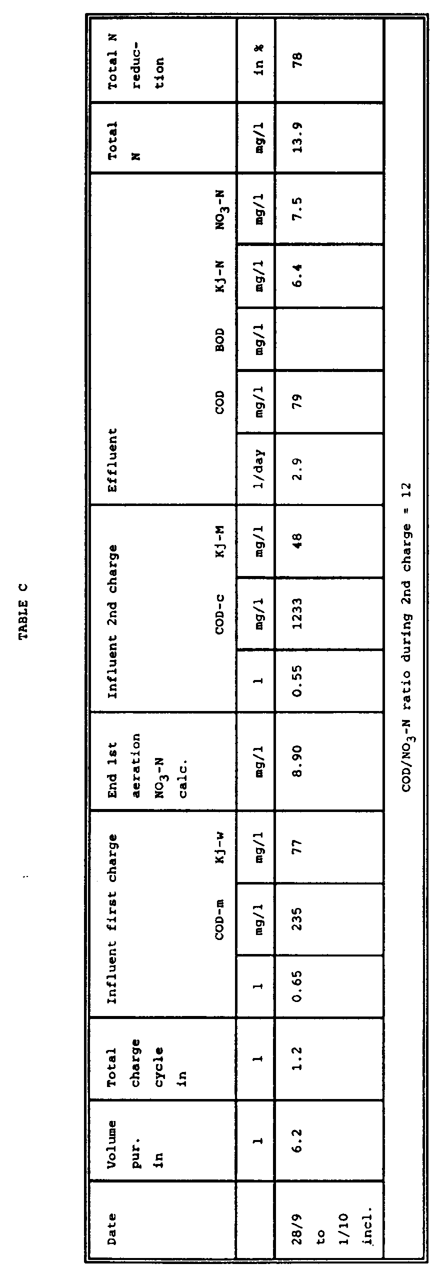

During this start-up period, the distribution of the influent in the test purification for the first and second charge matches, as far as possible, the distribution as used in practice in the mixed influent of the aerobic purification treatments. This distribution was chosen, because in practice these settings are used to control the contents of the entire process water circuit. This means, inter alia, that in the event of major rainfall more water has to be abstracted from the floating and washing water circuit, in order to keep the supply of floating and washing water at a particular level.

A consequence of this chosen distribution is that the COD/NO₃-N ratio in the case of the test purification during the second charge, is well above the desired minimum value of 5, and in fact 12.

The purification results during the period following the adaptation period were excellent; see Table D below. The total N reduction over the entire period was approximately 95%. NO₃-N concentrations of less than 1 mg/l in the effluent of the purification were normal and occurred during approximately 92% of the test period. The minimum and maximum value of the NO₃-N loads in the effluent during this period were 0.1 and 2.0 mg of NO₃-N/l, and the COD/NO₃-N ratio after the second charge, averaged over the test period, was 12.

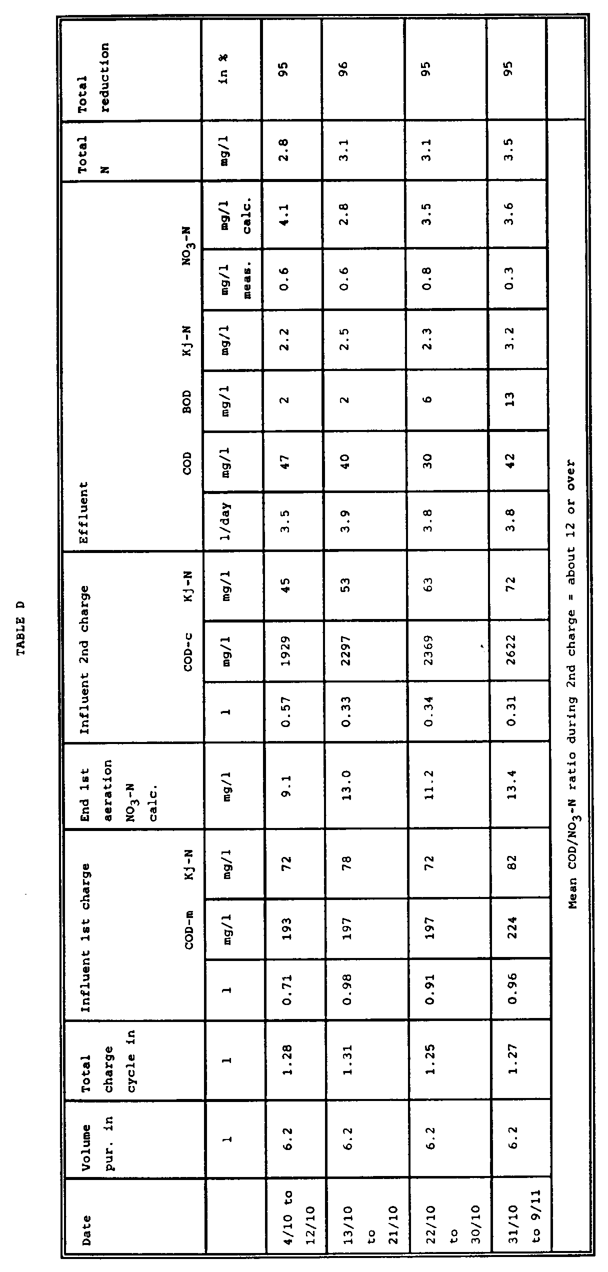

If a calculation were to be carried out on the basis of the amount of influent introduced and the Nₖⱼ-N concentration of the second charge and complete denitrification during the second charge, the NO₃-N concentration at the end of the second charge would, on average, have to be approximately 3.5 mg of NO₃-N. The measured value, however, was approximately 0.6 mg of NO₃-N/l. This lower value can probably be ascribed to the fact that the COD/NO₃-N ratio of the second charge, as stated, on average was approximately 12, and that this is considerably higher than the desired minimum ratio of 5.

Owing to the high COD concentration after the second charge, the first part of the second aeration phase will involve a simultaneously occurring nitrification and denitrification, as a result of which the final value in the NO₃-N concentration in the effluent is lower than the calculated value.

### Example II

In the case of this working example, charging the SBR reactor was carried out in two steps, using a "mixed" influent which was (a fraction of) the total waste water stream according to Table B above. This working example can be used to check what reduction in total N can be achieved if charging is carried out in two steps using such a mixed influent. More in particular, this mixed influent came from the influent basin (2) as depicted in Figure 1. The results of this embodiment are shown in Table E.

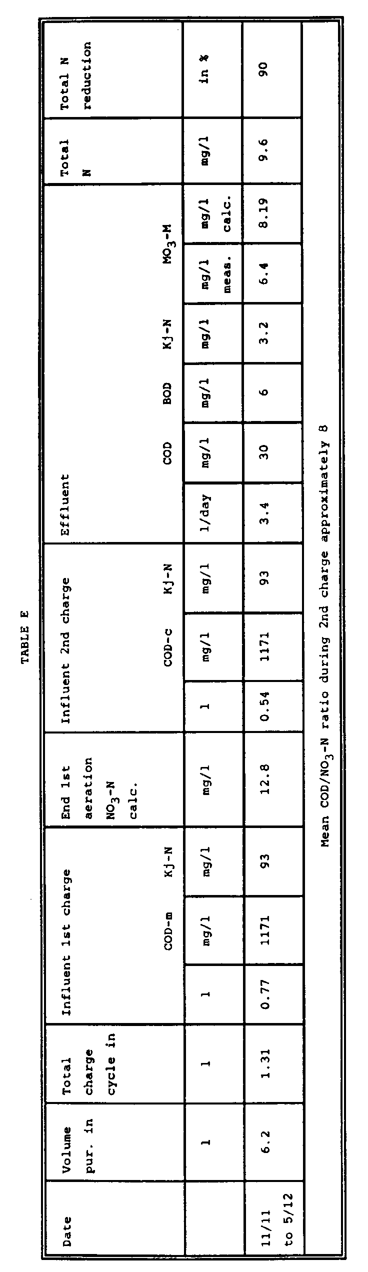

As Table E above shows, a total N load in the effluent of 9.6 mg/l was achieved, which corresponds to a reduction in total N of approximately 90%. The COD/NO₃-N ratio after adding the second influent was approximately 8 on average.

### Example III

This embodiment involved the SBR reactor being charged in two steps, the second charging being carried out with the return water from the sedimentation areas (10) in Figure 1.

In view of the particularly favourable results when floating and washing water were introduced separately as the second influent in Example I, an investigation was carried out as to whether the method according to the invention could be implemented using waste water of a comparable quality, for example the return water from the sedimentation areas, as said return water from the sedimentation areas (10) is similar, in terms of composition, to the floating and washing water. The results of this test are shown in Table F.

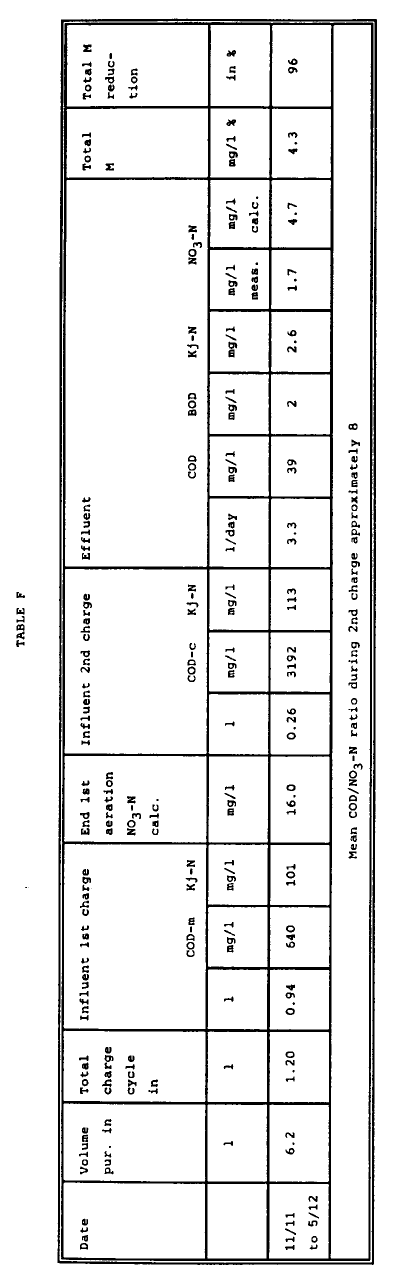

As Table F above shows, the purification results can be described as excellent. The NO₃-N in the effluent on average was 1.7 mg/l, which corresponds to a reduction in total N of approximately 96%. The COD/NO₃-N ratio after the second charge on average was approximately 8.

## Claims

1. Method for purifying nitrogen-containing waste water streams, characterized in that cycles are carried out which comprise:
(a) supplying a first waste water influent to an SBR reactor charged with nitrifying or denitrifying bacteria respectively, to a lower level than when the SBR reactor is charged in one single step;
(b) nitrifying by means of aerating the reactor contents;
(c) supplying a second waste water influent to the SBR reactor up to the maximum level of the SBR reactor, so that reactor contents having a COD/NO₃-N ratio ≥ 4 are obtained;
(d) carrying out a denitrification of the reactor contents;
(e) nitrifying once more by means of aerating the reactor contents;
(f) allowing the reactor contents to settle; and
(g) draining part of the reactor contents as effluent.

2. Method according to Claim 1, characterized in that the aeration step (b) is carried out over a period of 2-3 hours.

3. Method according to Claim 1 or 2, characterized in that, after the second influent in step (c) has been supplied, the reactor contents have a COD/NO₃-N ratio of ≥ 5.

4. Method according to one or more of Claims 1-3, characterized in that the dilution factor of the total amount of influent, as supplied to the reactor in steps (a) and (c) is 4-8.

5. Method according to one or more of Claims 1-4, characterized in that the volume ratio of the first influent in step (a) to the second influent in step (c) is 1:0.1 - 0.5.

6. Method according to one or more of Claims 1-5, characterized in that the denitrification in step (d) is carried out at a temperature in the range of 10 - 40°C.

7. Method according to one or more of Claims 1 - 6, characterized in that the denitrification step (d) is carried out over a period of 20 - 40 min.

8. Method according to one or more of Claims 1 - 7, characterized in that the aeration step (e) is carried out over a period of 2-4 hours.

9. Method according to one or more of Claims 1 - 8, characterized in that sedimentation step (f) is carried out over a period of 30 - 60 min.

10. Method according to one or more of Claims 1 - 9, characterized in that the duration of the cycle comprising the steps (a) - (g) is 6-10 hours.

11. Method according to one or more of Claims 1 - 10, characterized in that the nitrification steps (b) and (e) are carried out with stirring.

12. Method according to one or more of Claims 1 - 11, characterized in that the biomass used is activated sludge.

## Patentansprüche

1. Verfahren zum Reinigen stickstoffhaltiger Abwässer, dadurch gekennzeichnet, daß Zyklen durchgeführt werden, die umfassen:
(a) Zuführen eines ersten Abwasserzuflusses zu einem SBR-Reaktor, der entsprechend mit Nitrifikations- oder Denitrifikations-Bakterien in einem geringeren Ausmaß beschickt ist, als wenn der SBR-Reaktor in einem einzelnen Schritt beschickt wird;
(b) Nitrifizieren durch ein Durchlüften der Reaktorinhalte;
(c) Zuführen eines zweiten Abwasserzuflusses zu dem SBR-Reaktor bis zu einem maximalen Niveau des SBR-Reaktors, so daß Reaktorinhalte erreicht werden, die ein COD/NO₃-N Verhältnis ≥ 4 aufweisen;
(d) Durchführen einer Denitrifikation der Reaktorinhalte,
(e) erneutes Nitrifizieren durch ein Durchlüften der Reaktorinhalte;
(f) den Reaktorinhalten die Sedimentation ermöglichen; und
(g) Entleeren eines Teils der Reaktorinhalte als Abwasserabfluß.

2. Verfahren nach Anspruch 1, dadurch gekennzeichnet, daß der Durchlüftungsschritt (b) über einen Zeitraum von 2 bis 3 Stunden durchgeführt wird.

3. Verfahren nach Anspruch 1 oder 2, dadurch gekennzeichnet, daß die Reaktorinhalte ein COD-NO₃-N Verhältnis von ≥ 5 aufweisen, nachdem der zweite Abwasserzufluß in Schritt (c) zugeführt worden ist.

4. Verfahren nach einem der Ansprüche 1 bis 3, dadurch gekennzeichnet, daß der Verdünnungsfaktor der gesamten Menge des dem Reaktor in den Schritten (a) und (c) zugeführten Abwasserzuflusses 4 bis 8 beträgt.

5. Verfahren nach einem der Ansprüche 1 bis 4, dadurch gekennzeichnet, daß das Volumenverhältnis des ersten Abwasserzuflusses in Schritt (a) zu dem zweiten Abwasserzufluß in Schritt (c) 1 : 0,1 bis 1 : 0,5 beträgt.

6. Verfahren nach einem der Ansprüche 1 bis 5, dadurch gekennzeichnet, daß die Denitrifikation in Schritt (d) bei einer Temperatur in einem Bereich von 10 bis 40 °C durchgeführt wird.

7. Verfahren nach einem der Ansprüche 1 bis 6, dadurch gekennzeichnet, daß der Denitrifikationsschritt (d) über einen Zeitraum von 20 bis 40 min durchgeführt wird.

8. Verfahren nach einem der Ansprüche 1 bis 7, dadurch gekennzeichnet, daß der Durchlüftungsschritt (e) über einen Zeitraum von 2 bis 4 Stunden durchgeführt wird.

9. Verfahren nach einem der Ansprüche 1 bis 8, dadurch gekennzeichnet, daß der Sedimentationsschritt (f) über einen Zeitraum von 30 bis 60 min durchgeführt wird.

10. Verfahren nach einem der Ansprüche 1 bis 9, dadurch gekennzeichnet, daß die Dauer des Zyklusses, der die Schritte (a) bis (g) umfaßt, 6 bis 10 Stunden beträgt.

11. Verfahren nach einem der Ansprüche 1 bis 10, dadurch gekennzeichnet, daß die Nitrifikationsschritte (b) und (e) unter Rühren durchgeführt werden.

12. Verfahren nach einem der Ansprüche 1 bis 11, dadurch gekennzeichnet, daß die verwendete Biomasse ein aktivierter Schlamm ist.

## Revendications

1. Procédé de traitement d'eaux résiduaires azotées, caractérisé par le fait que l'on effectue des cycles comprenant les étapes consistant
(a) à introduire un premier affluent d'eaux résiduaires dans un réacteur SBR (Sequenced Batch Reactor) chargé de bactéries nitrifiantes et de bactéries dénitrifiantes, à un niveau inférieur à celui utilisé lorsque le réacteur SBR est chargé en une seule étape ;
(b) à effectuer une nitrification par aération du contenu du réacteur ;
(c) à introduire un second affluent d'eaux résiduaires dans le réacteur SBR jusqu'au niveau maximal du réacteur SBR, de façon à ce que le contenu du réacteur présente un rapport COD/NO₃-N≥ 4 ;
(d) à effectuer une dénitrification du contenu du réacteur ;
(e) à effectuer à nouveau une nitrification par aération du contenu du réacteur ;
(f) à laisser sédimenter le contenu du réacteur ; et
(g) à laisser s'écouler une partie du contenu du réacteur en tant qu'effluent.

2. Procédé selon la revendication 1, caractérisé par le fait que l'étape d'aération (b) est réalisée pendant une durée de 2-3 heures.

3. Procédé selon la revendication 1 ou 2, caractérisé par le fait que, après l'introduction du second affluent dans l'étape (c), le contenu du réacteur présente un rapport COD/NO₃-N ≥ 5.

4. Procédé selon l'une quelconque des revendications 1 à 3, caractérisé par le fait que le facteur de dilution de la quantité totale d'affluent introduite dans le réacteur dans les étapes (a) et (c) est de 4-8.

5. Procédé selon l'une quelconque des revendications 1 à 4, caractérisé par le fait que le rapport en volume du premier affluent de l'étape (a) à celui du second affluent de l'étape (c) est de 1 : 0,1-0,5.

6. Procédé selon l'une quelconque des revendications 1 à 5, caractérisé par le fait que l'étape de dénitrification (d) est réalisée à une température comprise dans la gamme de 10-40°C.

7. Procédé selon l'une quelconque des revendications 1 à 6, caractérisé par le fait que l'étape de dénitrification (d) est réalisée pendant une durée de 20-40 minutes.

8. Procédé selon l'une quelconque des revendications 1 à 7, caractérisé par le fait que l'étape d'aération (e) est réalisée pendant une durée de 2-4 heures.

9. Procédé selon l'une quelconque des revendications 1 à 8, caractérisé par le fait que l'étape de sédimentation (d) est réalisée pendant une durée de 30-60 minutes.

10. Procédé selon l'une quelconque des revendications 1 à 9, caractérisé par le fait que la durée du cycle comprenant les étapes (a)-(g) est de 6-10 heures.

11. Procédé selon l'une quelconque des revendications 1 à 10, caractérisé par le fait que les étapes de nitrification (b) et (e) sont réalisées sous agitation.

12. Procédé selon l'une quelconque des revendications 1 à 11, caractérisé par le fait que la biomasse utilisée est constituée par des boues activées.
